# EUROPEAN PATENT SPECIFICATION

(11) **EP 4 317 731 B1**
(45) Date of publication and mention of the grant of the patent: **02.12.2026**
(21) Application number: 22774755.7
(22) Date of filing: 10.02.2022
(51) Int. Cl.: F16C 35/077, B60K 17/04, F16H 57/022, B60K 7/00, F16B 39/10, F16C 19/18, F16C 35/073, F16H 1/46

(54) **REDUCTION GEAR**
UNTERSETZUNGSGETRIEBE
ENGRENAGE RÉDUCTEUR

(30) Priority: 26.03.2021 JP 2021053845
(43) Date of publication of application: 07.02.2024
(73) Proprietor: KYB Corporation, Minato-ku, Tokyo 105-5128 (JP)
(72) Inventor: SUZUKI, Kenji, Tokyo 105-5128 (JP); SUZUKI, Jun, Tokyo 105-5128 (JP)
(74) Representative: Grünecker Patent- und Rechtsanwälte PartG mbB
(86) International application number: PCT/JP2022/005470
(87) International publication number: WO 2022/201954

(56) References cited:
- WO-A1-2011/077869
- WO-A1-2015/001988
- JP-A- 2007 120 558
- JP-A- H06 249 297
- JP-A- H08 247 158
- JP-B2- 6 832 308

## Description

### TECHNICAL FIELD

The present invention relates to a speed reducer.

### BACKGROUND ART

JP 2006-161753 A discloses a hydraulic motor with a speed reducer including a variable displacement swash plate type hydraulic motor and a speed reducer. In the hydraulic motor with a speed reducer, a speed of rotation of the hydraulic motor is reduced by a planetary gear speed reduction mechanism of the speed reducer, the obtained rotation is transmitted to a casing of the speed reducer, and the casing of the speed reducer is rotated with a high torque. A bearing is provided between an outer peripheral surface of a casing of the hydraulic motor and an inner peripheral surface of the casing of the speed reducer, and the bearing rotatably supports the casing of the speed reducer with respect to the casing of the hydraulic motor. The bearing is retained by a nut screwed to a male screw portion of the casing of the hydraulic motor. Document WO 2015/001 988 A1 discloses a speed reducer falling within the wording of the preamble portion of claim 1.
Further prior art is known from documents JP 6 832 308 B2 and JP H06 249 297 A.

### SUMMARY OF INVENTION

The nut of the hydraulic motor with a speed reducer described in JP 2006-161753 A receives force in an axial direction from the bearing. Therefore, it is conceivable that with operation of the hydraulic motor with a speed reducer, the nut is loosened.

In response to this, it is conceivable to lock the nut by engaging a plug including a male screw portion with the nut. Specifically, the casing of the hydraulic motor is provided with an insertion hole, a part of which opens to the outer peripheral surface of the casing of the hydraulic motor and extends in an axial direction of the male screw portion of the casing of the hydraulic motor. In the insertion hole, a female screw portion to be screwed to the male screw portion of the plug is formed by tapping or the like. Since a part of the insertion hole opens to the outer peripheral surface of the casing of the hydraulic motor, in a state where the nut is screwed to the casing of the hydraulic motor, a part of a female screw portion of the nut faces the insertion hole. Therefore, by screw-fastening the plug to the insertion hole in this state, the male screw portion of the plug is bit into and engaged with the female screw portion of the nut. Accordingly, the nut is locked.

In a locking mechanism for the nut as described above, the insertion hole is provided in the casing of the hydraulic motor, and the female screw portion is further formed in the insertion hole. In addition, since a part of the insertion hole opens to the outer peripheral surface of the casing of the hydraulic motor, burrs are generated in the opening when the female screw portion is formed in the insertion hole. Therefore, a step of removing the burrs is required. In this way, the locking mechanism for the nut as described above takes time and effort for processing.

An object of the present invention is to easily lock a ring nut of a speed reducer.

According to the present invention, a speed reducer includes the features of claim 1.

### BRIEF DESCRIPTION OF DRAWINGS

[FIG. 1] FIG. 1 is a sectional view of a speed reducer according to the present embodiment, and illustrates a state before attachment of a locking member.
[FIG. 2] FIG. 2 is a partial sectional view obtained by enlarging II illustrated in FIG. 1.
[FIG. 3] FIG. 3 is a sectional view of a fixed housing and a ring nut as viewed from a section III illustrated in FIG. 1.
[FIG. 4] FIG. 4 is a perspective view of the locking member.
[FIG. 5] FIG. 5 is an enlarged sectional view illustrating a state after the locking member is attached to the speed reducer according to the present embodiment, and corresponds to FIG. 2.
[FIG. 6] FIG. 6 is a partial sectional view obtained by enlarging VI illustrated in FIG. 3, and illustrates a state after the attachment of the locking member.
[FIG. 7] FIG. 7 is an enlarged sectional view illustrating a state after attachment of a locking member according to a modification not falling within the wording of claim 1, and corresponds to FIG. 6.

### DESCRIPTION OF EMBODIMENTS

A speed reducer 100 according to an embodiment of the present invention will be described with reference to the drawings. In the present embodiment, a speed reducer that reduces power of a hydraulic motor, which is a drive source for traveling of a crawler type working machine such as a hydraulic excavator, and transmits the obtained power to a crawler belt will be described as an example.

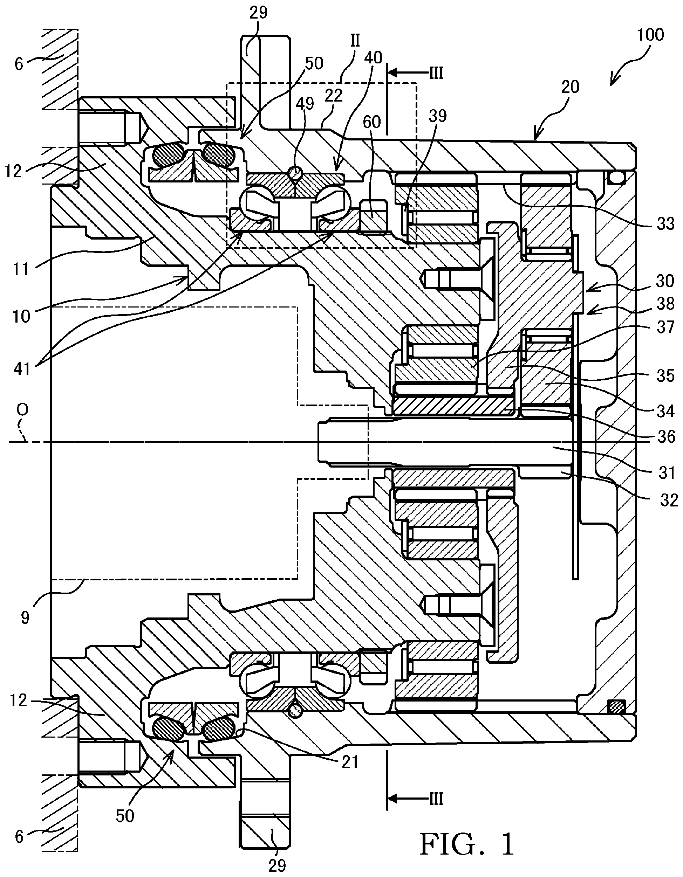

As illustrated in FIG. 1, the speed reducer 100 includes a fixed housing 10 that houses a hydraulic motor 9 as a drive source, a rotating housing 20 that is rotatably provided with respect to the fixed housing 10, and a speed reduction mechanism 30 that is housed in the rotating housing 20 and reduces a speed of output rotation of a shaft 31 of the hydraulic motor 9 and transmits the obtained output rotation to the rotating housing 20.

The rotating housing 20 is a cylindrical member, and rotates by transmission of the output rotation of the hydraulic motor 9 via the speed reduction mechanism 30.

The fixed housing 10 and the rotating housing 20 are disposed inside a path through which the crawler belt circulates. An annular rotating flange 29 protruding radially outward from an outer peripheral surface 22 is formed in the rotating housing 20. A sprocket (not illustrated) is fastened to the rotating flange 29 by bolts. The crawler belt meshes with the sprocket. When the rotating housing 20 and the sprocket rotate together, the crawler belt meshing with the sprocket circulates and the crawler type working machine travels.

The speed reducer 100 includes a bearing unit 40 as a bearing member provided between an outer periphery of the fixed housing 10 and an inner periphery of the rotating housing 20, and a ring nut 60 that retains the bearing unit 40. The bearing unit 40 includes a pair of bearings 41 that rotatably support the rotating housing 20 with respect to the fixed housing 10, and a stopper ring 49 having a circular sectional shape that restricts a relative movement between the bearings 41 and the rotating housing 20 in an axial direction. The pair of bearings 41 have the same configuration and are arranged symmetrically. Each of the bearings 41 is a single-row angular ball bearing in which a straight line connecting a contact point between a ball and an inner ring and a contact point between the ball and an outer ring forms a predetermined angle (contact angle) with respect to a radial direction. The pair of bearings 41 are attached to an outer peripheral surface of the fixed housing 10.

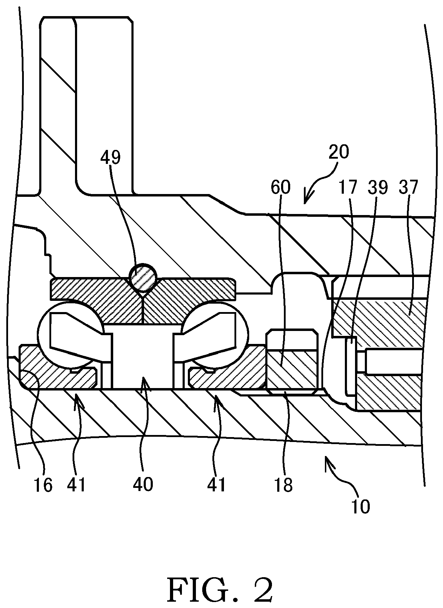

As illustrated in FIG. 2, the fixed housing 10 includes a step portion 16 and a male screw portion 17 on the outer peripheral surface. The ring nut 60 is screwed to the male screw portion 17 of the fixed housing 10. The pair of bearings 41 are sandwiched between the step portion 16 of the fixed housing 10 and the ring nut 60. The ring nut 60 receives force in the axial direction from the pair of bearings 41. Therefore, in order to prevent the ring nut 60 from being loosened due to operation of the speed reducer 100, the ring nut 60 is locked by a locking member 70 to be described later.

As illustrated in FIG. 1, the rotating housing 20 is rotatably supported by the pair of bearings 41 with respect to the fixed housing 10 fixed to a vehicle body 6 as an external member, and rotates about a rotating center axis O.

The hydraulic motor 9 is housed inside a body portion 11 of the fixed housing 10. The hydraulic motor 9 is, for example, a swash plate type piston motor. Since the hydraulic motor 9 can have a known configuration, detailed description thereof will be omitted. The drive source may be other than the hydraulic motor, for example, may be an electric motor. A fixed flange 12 is formed in the fixed housing 10 in a manner of protruding from an outer peripheral surface of the body portion 11. The fixed housing 10 is fixed to the vehicle body 6 by attaching the fixed flange 12 to the vehicle body 6 by bolts.

The speed reduction mechanism 30 is a planetary gear speed reduction mechanism that reduces the speed of the output rotation of the shaft 31 of the hydraulic motor 9 and transmits the obtained output rotation to the rotating housing 20, and includes a gear portion 38. The gear portion 38 includes a sun gear 32 provided on the shaft 31 of the hydraulic motor 9, an inner gear 33 provided on an inner wall of the rotating housing 20, a plurality of planetary gears 34 meshing with both the sun gear 32 and the inner gear 33, a planetary carrier 35 supporting each of the planetary gears 34, a second-stage sun gear 36 meshing with the planetary carrier 35, and a plurality of planetary gears 37 meshing with both the sun gear 36 and the inner gear 33. The planetary gear 37 is provided with a washer 39. The washer 39 may not be provided.

A floating seal 50 that seals a gap between the fixed housing 10 and the rotating housing 20 is provided between the fixed housing 10 and the rotating housing 20. The floating seal 50 seals the gap such that oil in the speed reducer 100 is prevented from leaking to an outside when the rotating housing 20 rotates, and also prevents foreign matters such as mud from entering the speed reducer 100 from the outside.

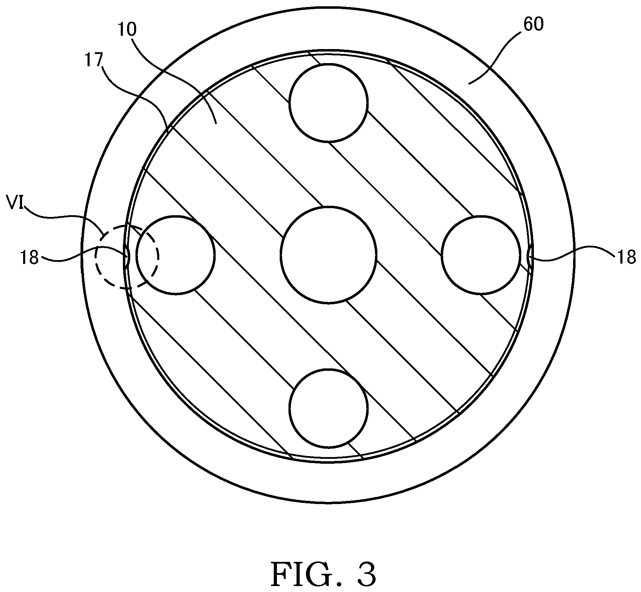

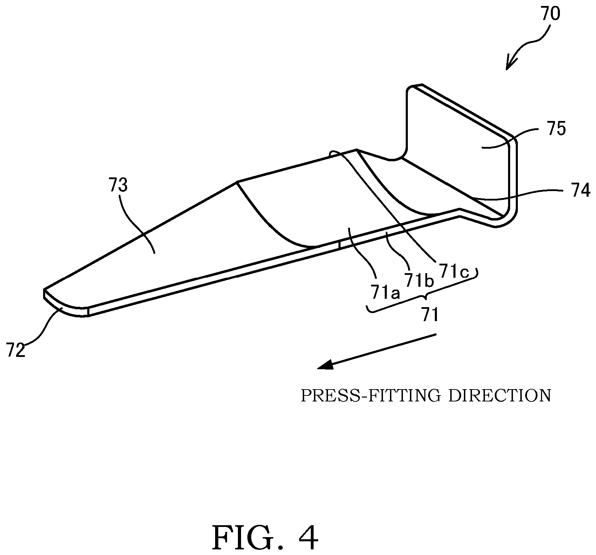

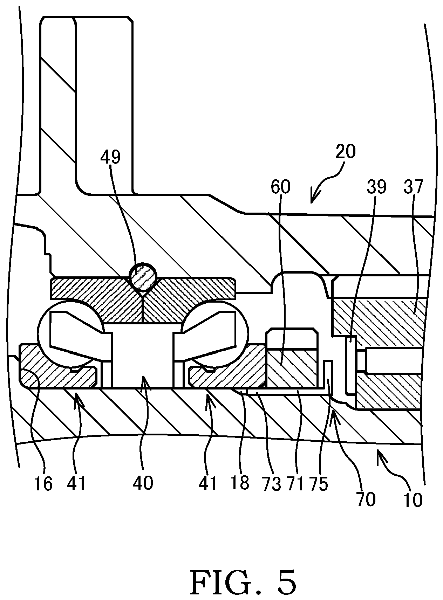

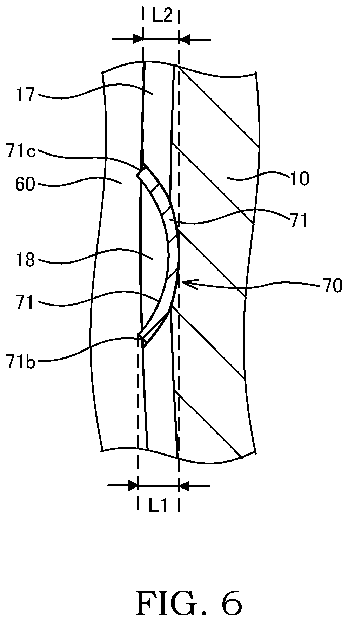

Next, a configuration in which the ring nut 60 is locked will be described with reference to FIGS. 3 to 6. FIG. 3 is a sectional view of the fixed housing 10 and the ring nut 60 as viewed from a section III illustrated in FIG. 1, and illustrates a state before attachment of the locking member 70. In FIG. 3, configurations other than the fixed housing 10 and the ring nut 60 are omitted. FIG. 4 is a perspective view of the locking member 70. FIG. 5 is an enlarged sectional view illustrating a state after the attachment of the locking member 70, and corresponds to FIG. 2. FIG. 6 is a partial sectional view obtained by enlarging a VI part illustrated in FIG. 3, and illustrates a state after the attachment of the locking member 70.

As illustrated in FIGS. 3 and 6, the male screw portion 17 of the fixed housing 10 is provided with a notch 18 that opens to the outer peripheral surface of the fixed housing 10 with a predetermined width and that extends in the axial direction. In the present embodiment, two notches 18 are each formed in an arc shape in a section along the radial direction of the male screw portion 17, and are provided in the fixed housing 10 at positions facing each other with the shaft 31 of the hydraulic motor 9 sandwiched therebetween. Three or more notches 18 may be provided at equal intervals in a circumferential direction of the fixed housing 10. As described later, the notch 18 is formed such that a part of a curved surface portion 71 of the locking member 70 protrudes from the notch 18 beyond the outer peripheral surface of the fixed housing 10 in a state where the locking member 70 is press-fitted.

As illustrated in FIG. 4, the speed reducer 100 further includes the locking member 70 that locks the ring nut 60. The locking member 70 is formed of a metal having high hardness. The locking member 70 is press-fitted between an inner peripheral surface of the notch 18 and the ring nut 60, fixed in the notch 18, and engaged with the ring nut 60 in the circumferential direction. Accordingly, the ring nut 60 is locked.

The locking member 70 is formed to extend in a press-fitting direction (arrow direction in FIG. 4) into the notch 18. The locking member 70 includes the arc-shaped curved surface portion 71, a distal end portion 72 first press-fitted into the notch 18 (in other words, end portion on a front side in the press-fitting direction), a tapered portion 73 in which a length corresponding to a width direction of the notch 18 is reduced toward the distal end portion 72 in a state of being press-fitted into the notch 18, an end portion 74 opposite to the distal end portion 72 in the press-fitting direction into the notch 18, and a head portion 75 provided to protrude from the end portion 74. In other words, the tapered portion 73 is formed such that a length in a tangential direction connecting two open ends to the outer peripheral surface of the fixed housing 10 in the notch 18 is reduced toward the distal end portion 72 in the state of being press-fitted into the notch 18.

The tapered portion 73 is provided between the distal end portion 72 and the curved surface portion 71, and is formed in a curved surface shape continuous with the curved surface portion 71. The head portion 75 protrudes from the end portion 74 to a radial outer side of the male screw portion 17 in a state of being press-fitted into the notch 18. The locking member 70 is formed in an L shape so as to extend in the press-fitting direction into the notch 18 and to be bent in the radial direction of the male screw portion 17 in a state of being press-fitted into the notch 18.

As illustrated in FIGS. 5 and 6, in a state where the ring nut 60 is screwed to the male screw portion 17 of the fixed housing 10, the locking member 70 is press-fitted into the notch 18 from the tapered portion 73 with an inner peripheral surface 71a of the curved surface portion 71 facing the radial outer side of the male screw portion 17. Since the head portion 75 of the locking member 70 extends perpendicularly to the press-fitting direction into the notch 18, by applying a load to the head portion 75 by driving the head portion 75 or the like, the locking member 70 can be easily press-fitted into the notch 18. Then, the load is applied to the head portion 75 until the curved surface portion 71 is press-fitted into the notch 18. In this way, the curved surface portion 71 is press-fitted into the notch 18 with the inner peripheral surface 71a facing the radial outer side of the male screw portion 17.

Here, as illustrated in FIG. 6, the notch 18 is formed such that a part of the curved surface portion 71 of the locking member 70 (specifically, both end portions of the curved surface portion 71 in the circumferential direction) protrudes from the notch 18 to the radial outer side beyond the outer peripheral surface of the fixed housing 10 in a state where the locking member 70 is press-fitted. In the state where the locking member 70 is press-fitted into the notch 18, a length L1 of the curved surface portion 71 of the locking member 70 in the radial direction of the male screw portion 17 is larger than a depth L2 of the notch 18 in the radial direction of the male screw portion 17. Therefore, when the locking member 70 is press-fitted into the notch 18 in the state where the ring nut 60 is screwed to the male screw portion 17, a portion of the curved surface portion 71 protruding from the notch 18 is bit into a female screw portion of the ring nut 60 and is engaged with the female screw portion in the circumferential direction. Accordingly, the locking member 70 is fixed in the notch 18 and locks the ring nut 60.

Such a locking mechanism for the ring nut 60 is formed by providing the notch 18 on the male screw portion 17 of the fixed housing 10. Specifically, in the speed reducer 100 according to the present embodiment, first, the notch 18 is formed on a portion where the ring nut 60 is attached to the outer peripheral surface of the fixed housing 10. Thereafter, the male screw portion 17 is formed on the outer peripheral surface of the fixed housing 10 including the notch 18. No male screw portion is formed on the inner peripheral surface of the notch 18.

Here, for example, it is conceivable that a ring nut is locked by a locking member including a male screw portion. In this case, an insertion hole having a part opening to an outer peripheral surface of a fixed housing and extending in an axial direction of a male screw portion of the fixed housing is provided, and a female screw portion to be screwed to a male screw portion of a plug by tapping or the like is provided in the insertion hole. Then, by screw-fastening the locking member to the insertion hole in a state where the ring nut is screwed to the male screw portion of the fixed housing, the male screw portion of the locking member is bit into and engaged with a female screw portion of the ring nut, and the ring nut is locked. In such a locking mechanism for the ring nut, since a part of the insertion hole opens to the outer peripheral surface of the fixed housing, burrs are generated in the opening when the female screw portion is formed in the insertion hole. Therefore, a step of removing the burrs is required. Therefore, such a locking mechanism for the ring nut takes time and effort for processing.

On the other hand, in the speed reducer 100 according to the present embodiment, the locking member 70 is press-fitted into the notch 18 and fixed in the notch 18. Therefore, a step of forming the female screw portion for locking the ring nut 60 is not required, and the step of removing the burrs is also eliminated. Therefore, the ring nut 60 can be easily locked with a small number of man-hours.

In addition, since the curved surface portion 71 of the locking member 70 is press-fitted into the notch 18 with the inner peripheral surface 71a facing to the radial outer side of the male screw portion 17, two portions, i.e., both end portions of the curved surface portion 71 in the circumferential direction are engaged with the ring nut 60. Specifically, two corner portions between the inner peripheral surface 71a of the curved surface portion 71 and both side surfaces 71b and 71c (see FIG. 6) of the curved surface portion 71 are bit into and engaged with the female screw portion of the ring nut 60. Therefore, the ring nut 60 can be more reliably locked.

In addition, since the locking member 70 includes the tapered portion 73 in which the length corresponding to the width direction of the notch 18 is reduced toward the distal end portion 72 in the state of being press-fitted into the notch 18 and the tapered portion 73 is press-fitted into the notch 18 from the distal end portion 72, the locking member 70 can be easily press-fitted into the notch 18.

The locking member 70 may not include the tapered portion 73. In addition, the locking member 70 may not include the head portion 75 as long as the load can be applied until the curved surface portion 71 is press-fitted into the notch 18.

The gear portion 38 of the speed reduction mechanism 30 is provided on the fixed housing 10 to intersect an extension line of the notch 18. In other words, in the fixed housing 10, in a state where the locking member 70 is not present, the notch 18 and the gear portion 38 face each other without any other member sandwiched therebetween in the axial direction of the male screw portion 17. Further, a distance between the gear portion 38 and the ring nut 60 in the axial direction of the male screw portion 17 is smaller than a length of the locking member 70 in the press-fitting direction into the notch 18. Accordingly, even if the locking member 70 press-fitted into the notch 18 receives force in a direction of falling off the notch 18, the locking member 70 comes into contact with the gear portion 38 (specifically, the planetary gear 37 or the washer 39 provided on the planetary gear 37) before falling off the notch 18. Accordingly, the locking member 70 is prevented from falling off the notch 18.

According to the above embodiment, the following effects are achieved.

In the speed reducer 100, since the notch 18 is provided in the male screw portion 17 of the fixed housing 10 and the curved surface portion 71 of the locking member 70 is press-fitted into the notch 18 and engaged with the ring nut 60 in the circumferential direction, the ring nut 60 is locked. Since the locking member 70 is press-fitted into the notch 18 and fixed in the notch 18, the step of forming the female screw portion for locking the ring nut 60 is not required, and the step of removing the burrs is also eliminated. Therefore, the ring nut 60 can be easily locked with a small number of man-hours.

In the state where the locking member 70 is press-fitted into the notch 18, the head portion 75 of the locking member 70 extends perpendicularly to the press-fitting direction into the notch 18. Therefore, by applying the load to the head portion 75, the locking member 70 can be easily press-fitted into the notch 18.

The curved surface portion 71 is press-fitted into the notch 18, and two portions, i.e., both end portions of the curved surface portion 71 in the circumferential direction are engaged with the ring nut 60. Therefore, the ring nut 60 can be more reliably locked.

The locking member 70 includes the tapered portion 73 in which the length corresponding to the width direction of the notch 18 is reduced toward the distal end portion 72 in the state of being press-fitted into the notch 18, and is press-fitted into the notch 18 from the tapered portion 73. Therefore, the locking member 70 is easily press-fitted into the notch 18.

The speed reduction mechanism 30 includes the gear portion 38 provided to intersect the extension line of the notch 18, and the distance between the gear portion 38 and the ring nut 60 in the axial direction of the male screw portion 17 is smaller than the length of the locking member 70 in the press-fitting direction into the notch 18. Accordingly, even if the locking member 70 press-fitted into the notch 18 receives the force in the direction of falling off the notch 18, the locking member 70 comes into contact with the gear portion 38 before falling off the notch 18. Therefore, the locking member 70 is prevented from falling off the notch 18.

Next, a modification, not falling within the wording of claim 1, will be described.

### <Modification, not an embodiment>

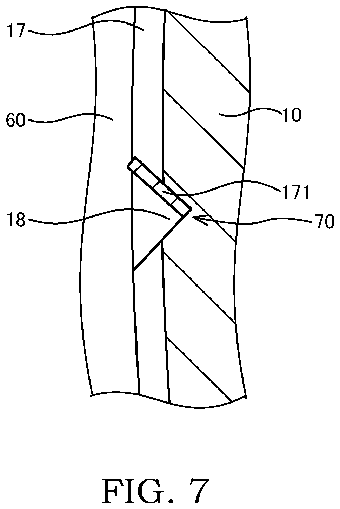

The locking member 70 in the above embodiment includes the arc-shaped curved surface portion 71 and the curved surface-shaped tapered portion 73 continuous with the curved surface portion 71. In a modification, not falling within the wording of claim 1, the locking member 70 may not include the arc-shaped curved surface portion 71 and instead, may include a flat surface portion 171 having a flat shape, and the tapered portion 73 may be formed in a flat shape continuous with the flat surface portion 171. In this case, as illustrated in FIG. 7, the flat surface portion 171 of the locking member 70 may be bit into a female screw portion of the ring nut 60 and engaged with the female screw portion in the circumferential direction. The notch 18 is formed in a triangular shape in a section along a radial direction of the male screw portion 17. Then, the locking member 70 is press-fitted into the notch 18 such that an inner peripheral surface of the notch 18 and the flat surface portion 171 of the locking member 70 are in contact with each other, and one corner portion of the flat surface portion 171 of the locking member 70 is bit into the female screw portion of the ring nut 60 and engaged with the female screw portion of the ring nut 60 in the circumferential direction.

The configuration, functions, and effects of the modification as described above will be collectively described.

The speed reducer 100 includes: the fixed housing 10 that houses the hydraulic motor 9 as a drive source and includes the male screw portion 17 on the outer peripheral surface; the rotating housing 20 configured to rotate by the transmission of the output rotation of the hydraulic motor 9; the speed reduction mechanism 30 housed in the rotating housing 20 and configured to reduce the speed of the output rotation of the hydraulic motor 9 and transmit the obtained output rotation to the rotating housing 20; the bearing unit 40 as a bearing member attached to the fixed housing 10 and configured to rotatably support the rotating housing 20 with respect to the fixed housing 10; the ring nut 60 screwed to the male screw portion 17 of the fixed housing 10 and configured to retain the bearing unit 40; and the locking member 70 configured to lock the ring nut 60. The male screw portion 17 is provided with the notch 18 that opens to the outer peripheral surface of the fixed housing 10 with the predetermined width and that extends in the axial direction. The locking member 70 is press-fitted between the notch 18 and the ring nut 60, is fixed in the notch 18, and is engaged with the ring nut 60 in the circumferential direction.

In this configuration, since the notch 18 is provided in the male screw portion 17 of the fixed housing 10 and the locking member 70 is press-fitted into the notch 18 and engaged with the ring nut 60 in the circumferential direction, the ring nut 60 is locked. Since the locking member 70 is press-fitted into the notch 18 and fixed in the notch 18, the step of forming the female screw portion for locking the ring nut 60 is not required, and the step of removing the burrs is also eliminated. Therefore, the ring nut 60 can be easily locked with a small number of man-hours.

In the speed reducer 100, the locking member 70 includes the arc-shaped curved surface portion 71, and the curved surface portion 71 is press-fitted into the notch 18 with the inner peripheral surface 71a facing the radial outer side of the male screw portion 17.

In this configuration, the locking member 70 is press-fitted into the notch 18, and two portions, i.e., two end portions of the curved surface portion 71 are engaged with the ring nut 60. Therefore, the ring nut 60 can be more reliably locked.

In the speed reducer 100, the locking member 70 includes the tapered portion 73 in which the length corresponding to the width direction of the notch 18 is reduced toward the distal end portion 72 in the state of being press-fitted into the notch 18, and the tapered portion 73 is press-fitted into the notch 18 from the distal end portion 72.

In this configuration, the locking member 70 is easily press-fitted into the notch 18 by the tapered portion 73.

In the speed reducer 100, the speed reduction mechanism 30 includes the gear portion 38 provided to intersect the extension line of the notch 18, and the distance between the gear portion 38 and the ring nut 60 in the axial direction is smaller than the length of the locking member 70 in the press-fitting direction into the notch 18.

In this configuration, the locking member 70 is prevented from falling off the notch 18 by the gear portion 38 of the speed reduction mechanism 30.

## Claims

1. A speed reducer (100) comprising:
a fixed housing (10) that houses a drive source (9) and includes a male screw portion (17) on an outer peripheral surface;
a rotating housing (20) configured to rotate by transmission of output rotation of the drive source (9);
a speed reduction mechanism (30) housed in the rotating housing (20) and configured to reduce a speed of the output rotation of the drive source (9) and transmit the obtained output rotation to the rotating housing (20);
a bearing member (40) attached to the fixed housing (10) and configured to rotatably support the rotating housing (20) with respect to the fixed housing (10);
a ring nut (60) screwed to the male screw portion (17) of the fixed housing (10) and configured to retain the bearing member (40); and
a locking member (70) configured to lock the ring nut (60), wherein
the male screw portion (17) is provided with a notch (18) that opens to the outer peripheral surface of the fixed housing (10) with a predetermined width and that extends in an axial direction,
**characterized in that**
the locking member (70) includes an arc-shaped curved surface portion (71), and the locking member (70) is press-fitted between the notch (18) and the ring nut (60) with an inner peripheral surface (71a) of the curved surface portion (71) facing a radial outer side of the male screw portion (17),
fixed in the notch (18), and engaged with the ring nut (60) in a circumferential direction.

2. The speed reducer (100) according to claim 1, wherein
the locking member (70) includes a tapered portion (73) in which a length corresponding to a width direction of the notch (18) is reduced toward a distal end portion (72) in a state of being press-fitted into the notch (18), and
the tapered portion (73) is press-fitted into the notch (18) from the distal end portion (72).

3. The speed reducer (100) according to claim 1, wherein
the speed reduction mechanism (30) includes a gear portion (38) provided to intersect an extension line of the notch (18), and
a distance between the gear portion (38) and the ring nut (60) in the axial direction is smaller than a length of the locking member (70) in a press-fitting direction into the notch (18).

## Patentansprüche

1. Ein Drehzahlreduzierer (100), umfassend:
ein feststehendes Gehäuse (10), das eine Antriebsquelle (9) aufnimmt und an einer Außenumfangsfläche einen männlichen Schraubenabschnitt (17) aufweist;
ein rotierendes Gehäuse (20), das so ausgebildet ist, dass es sich durch Übertragung der Abtriebsdrehung der Antriebsquelle (9) dreht;
einen Untersetzungsmechanismus (30), der in dem rotierenden Gehäuse (20) untergebracht ist und dazu ausgelegt ist, die Drehzahl der Abtriebsdrehung der Antriebsquelle (9) zu reduzieren und die erhaltene Abtriebsdrehung auf das rotierende Gehäuse (20) zu übertragen;
ein Lagerelement (40), das an dem feststehenden Gehäuse (10) befestigt ist und dazu ausgelegt ist, das rotierende Gehäuse (20) gegenüber dem feststehenden Gehäuse (10) drehbar zu lagern;
eine Ringmutter (60), die auf den männlichen Schraubenabschnitt (17) des feststehenden Gehäuses (10) aufgeschraubt ist und dazu ausgelegt ist, das Lagerelement (40) zu halten; sowie
ein Verriegelungselement (70), das so ausgebildet ist, dass es die Ringmutter (60) verriegelt, wobei
der männliche Schraubenabschnitt (17) mit einer Kerbe (18) versehen ist, die sich mit einer vorbestimmten Breite zur Außenumfangsfläche des feststehenden Gehäuses (10) hin öffnet und sich in axialer Richtung erstreckt,
**dadurch gekennzeichnet, dass**
das Verriegelungselement (70) einen bogenförmigen gekrümmten Oberflächenabschnitt (71) aufweist, und
das Verriegelungselement (70) zwischen der Aussparung (18) und der Ringmutter (60) eingepresst ist, wobei eine Innenumfangsfläche (71a) des gekrümmten Oberflächenabschnitts (71) einer radialen Außenumfangsseite des männlichen Schraubenabschnitts (17) zugewandt ist,
in der Aussparung (18) fixiert ist und in Umfangsrichtung mit der Ringmutter (60) in Eingriff steht.

2. Der Drehzahlreduzierer (100) nach Anspruch 1, wobei
das Verriegelungselement (70) einen verjüngten Abschnitt (73) aufweist, bei dem sich eine Länge, die der Breitenrichtung der Aussparung (18) entspricht, in einem in die Aussparung (18) eingepressten Zustand zum distalen Endabschnitt (72) hin verjüngt, und
der verjüngte Abschnitt (73) vom distalen Endabschnitt (72) her in die Aussparung (18) eingepresst ist.

3. Der Drehzahlreduzierer (100) nach Anspruch 1, wobei
der Untersetzungsmechanismus (30) einen Zahnradabschnitt (38) aufweist, der so angeordnet ist, dass er eine Verlängerungslinie der Aussparung (18) schneidet, und
ein Abstand zwischen dem Zahnradabschnitt (38) und der Ringmutter (60) in axialer Richtung kleiner als eine Länge des Verriegelungselements (70) in einer Einpassrichtung in die Aussparung (18) ist.

## Revendications

1. Réducteur de vitesse (100), comprenant :
un logement fixe (10) qui loge une source d'entraînement (9) et inclut une partie de vis mâle (17) sur une surface périphérique extérieure ;
un logement rotatif (20) configuré pour tourner par transmission de la rotation de sortie de la source d'entraînement (9) ;
un mécanisme de réduction de vitesse (30) logé dans le logement rotatif (20) et configuré pour réduire une vitesse de la rotation de sortie de la source d'entraînement (9) et transmettre la rotation de sortie obtenue au logement rotatif (20) ;
un élément de palier (40) fixé au logement fixe (10) et configuré pour supporter de manière rotative le logement rotatif (20) par rapport au logement fixe (10) ;
un écrou annulaire (60) vissé à la partie de vis mâle (17) du logement fixe (10) et configuré pour retenir l'élément de palier (40) ; et
un élément de verrouillage (70) configuré pour verrouiller l'écrou annulaire (60), dans lequel la partie de vis mâle (17) est munie d'une encoche (18) qui s'ouvre sur la surface périphérique extérieure du logement fixe (10) avec une largeur prédéterminée et qui s'étend dans une direction axiale,
**caractérisé en ce que**
l'élément de verrouillage (70) inclut une partie de surface incurvée en forme d'arc (71), et l'élément de verrouillage (70) est ajusté par pression entre l'encoche (18) et l'écrou annulaire (60) avec une surface périphérique intérieure (71a) de la partie de surface incurvée (71) faisant face à un côté extérieur radial de la partie de vis mâle (17), fixé dans l'encoche (18), et en prise avec l'écrou annulaire (60) dans une direction circonférentielle.

2. Réducteur de vitesse (100) selon la revendication 1, dans lequel l'élément de verrouillage (70) inclut une partie conique (73) dans laquelle une longueur correspondant à une direction de largeur de l'encoche (18) est réduite vers une partie d'extrémité distale (72) dans un état où elle est ajustée par pression dans l'encoche (18), et la partie conique (73) est ajustée par pression dans l'encoche (18) à partir de la partie d'extrémité distale (72).

3. Réducteur de vitesse (100) selon la revendication 1, dans lequel le mécanisme de réduction de vitesse (30) inclut une partie d'engrenage (38) prévue pour recouper une ligne d'extension de l'encoche (18), et
une distance entre la partie d'engrenage (38) et l'écrou annulaire (60) dans la direction axiale est inférieure à une longueur de l'élément de verrouillage (70) dans une direction d'ajustement par pression dans l'encoche (18).
